## Europäisches Patentamt

## European Patent Office

## Office européen des brevets

(11) Veröffentlichungsnummer: **0 140 118**
**B1**

# (12) EUROPÄISCHE PATENTSCHRIFT

(45) Veröffentlichungstag der Patentschrift:
26.07.89

(21) Anmeldenummer: **84111042.2**

(22) Anmeldetag: **15.09.84**

(51) Int. Cl.⁴: **B 29 D 30/56** // C09D5/20 ,
**B29K21:00**

(54) Verfahren zum Herstellen von Überzügen insbesondere für die Runderneuerung und Reparatur von Kraftfahrzeugen.

(30) Priorität: **16.09.83 DE 3333538**

(43) Veröffentlichungstag der Anmeldung:
**08.05.85 Patentblatt 85/19**

(45) Bekanntmachung des Hinweises auf die Patenterteilung:
**26.07.89 Patentblatt 89/30**

(84) Benannte Vertragsstaaten:
**AT BE CH FR GB IT LI LU NL SE**

(56) Entgegenhaltungen:
**DE-A- 2 423 062**
**FR-A- 2 130 355**
**US-A- 3 494 994**
**US-A- 4 399 852**
**RESEARCH DISCLOSURE, Nr. 140, Dezember 1975,**
**Seite 40, Nr. 14005, disclosd by The Goodyear Tire &**
**Rubber Cy., Hampshire, GB; "A method of retreading a**
**tire with a precured tread"**
**Idem**
**Idem**

(73) Patentinhaber: **BANDAG, INCORPORATED, Bandag**
**Center, Muscatine, Iowa 52761 (US)**

(72) Erfinder: **Schmermbeck, Dieter, Suitberg-Weg 2b,**
**D-4630 Bochum-Harpen (DE)**

(74) Vertreter: **Patentanwälte Wenzel & Kalkoff,**
**Flasskuhle 6 Postfach 2448, D-5810 Witten (DE)**

## Beschreibung

Die Erfindung betrifft ein Verfahren zum Abdichten der Nahtstelle zwischen einem Laufstreifen und einer Karkasse bei der Reifenrunderneuerung eines abgefahrenen Luft- oder Vollgummireifens, bei dem auf die vorbereitete Karkasse des Reifens eine Bindekautschukschicht und auf diese ein vorgefertigter Gummilaufstreifen aufgebracht, gasförmige Einschlüsse zwischen den aufgebrachten Schichten abgeführt und der so vorbereitete Rohling zum Vulkanisieren der Bindekautschukschicht in einem Überdruckraum erwärmt wird und bei dem vor dem Erwärmen in dem Überdruckraum die Nahtstellen mit Hilfe eines flüssigkeitsdichten Filmes aus einem in einem Lösungsmittel erweichten Polyurethan abgedeckt werden, der nach der Erwärmung wieder entfernt wird.

Ein derartiges Verfahren ist zum Beispiel durch die Research Disclosure No. 140 vom Dezember 1975 mit der laufenden Nummer 14005, «A method of retreading a tire with a precured tread», The Goodyear Tire & Rubber Cy, bekannt. Allerdings bedarf es bei diesem bekannten Verfahren zusätzlicher Hilfsmittel, um an den Rändern des Laufstreifens während der Vulkanisation in dem Überdruckraum ein Ablösen des Laufstreifens von der Karkasse sicher zu vermeiden. Der Film zum Abdichten hat also keine Klebeeigenschaften in dem Sinne, daß er selbst in der Lage ist, den Zusammenhalt des vorbereiteten Rohlings an dieser Stelle zu garantieren.

Die genannte Textstelle läßt dem Benutzer dieses Verfahrens die Wahl, das Polyurethan Bestandteil des Reifens werden zu lassen oder nach der Wärme- und Druckbehandlung in dem Überdruckraum zu entfernen. Dieser Hinweis läßt Rückschlüsse auf die Art des verwendeten Polyurethans zu. Es ist so gut wie sicher, daß auch das gelöste Polyurethan ausvulkanisiert, also irreversibel in seinen Eigenschaften verändert wird. Denn nur in diesem Fall kann geduldet werden, daß das Polyurethan Bestandteil eines späteren, runderneuerten Reifens wird.

Es ist Aufgabe der Erfindung, ein Verfahren der eingangs genannten Art so zu verbessern, daß der aufgebrachte Film bei der späteren Entfernung von den Nahtstellen reißfest gemacht und sicher entfernt werden kann.

Zur Lösung dieser Aufgabe wird vorgeschlagen, daß ein in Dimethylformamid ($C_3H_7NO$) aufgelöstes, thermoplastisch verarbeitbares PUR-Elastomer, nämlich ein Desmopan[®] 385-Granulat als flüssigkeitsdichter Film verwendet wird, und daß auf den noch nicht abgetrockneten Film ein Gewebe aufgebracht und angedrückt wird.

Es wurde gefunden, daß nach dem rasch erfolgenden Verdunsten des Lösungsmittels der gebildete Film an der Oberfläche sicher haftet und genauso sicher wieder bei Bedarf als Ganzes, oder wenn es unter den gegebenen Umständen wünschenswert ist, in Teilen abgezogen werden kann. Die Dicke des Überzuges ist praktisch beliebig und hängt allein davon ab, wieviel Ausgangsmaterial pro Flächeneinheit der Oberfläche aufgetragen wird. Es sind hauchdünne, folienähnliche Überzüge ebenso herstellbar wie mehrere Millimeter starke Überzüge. Das hohe Haftvermögen des Filmes auf praktisch beliebig geformten Oberflächen und die hohe Flexibilität sorgen dafür, daß auch zerklüftete Reifenseitenflanken abgedichtet werden können.

Es hat sich gezeigt, daß sich der flüssigkeitsdichte Film bei Anwendung des erfindungsgemäßen Verfahrens in feinster Verteilung auf die Reifenbereiche zur Bildung eines Überzuges mit abgeschlossener Oberfläche aufbringen läßt.

Der flüssige Film aus dem aufgelösten, thermoplastisch verarbeitbaren PUR-Elastomer Desmopan[®] 385- läßt sich bei Raumtemperatur mittels eines Spachtels oder Pinsels aufbringen. Selbstverständlich kann er auch durch Spritzen insbesondere mit einer Spritzpistole auf die jeweilige Nahtstelle zwischen einem Laufstreifen und einer Karkasse aufgebracht werden. Je nach der gewünschten Dünnflüssigkeit oder Dickflüssigkeit des Films wird in das Lösungsmittel ein Anteil von 10 bis 30 Gewichtsprozent PUR-Elastomergranulat eingemischt.

Unmittelbar nach dem Aufbringen des Filmes auf die Nahtstellen zwischen dem Laufstreifen und der Karkasse wird ein Gewebeabschnitt auf den noch frischen Überzug aufgebracht und angedrückt. Der Gewebeabschnitt, der vorzugsweise aus einem Nylongewebe gebildet ist, wird so in dem Film fest verankert und bildet praktisch eine Armierung, die das Entfernen insbesondere dann extrem erleichtert, wenn sich der Film in einer sehr rauhen Oberfläche festgekrallt hat und abgezogen werden soll. Die Reißfestigkeit des Filmes nimmt durch das Aufbringen des Gewebes noch erheblich zu.

Wesentlich ist, daß der die Nahtstellen abdeckende Film die seitlichen Austrittsstellen der Bindekautschukschicht übergreift. Wie weit der Film darüber hinaus auf der Laufstreifen- oder Karkassenseite verbreitert wird, hängt von den jeweiligen Umständen ab. Es genügt im allgemeinen ein schmaler ringförmiger Streifen, der die ebenfalls ringförmigen seitlichen Austrittsstellen der Bindekautschukschicht auf deren beiden Seiten sicher überbrückt.

Für den Zusammenhalt des Schichtaufbaus des Reifenrohlings ist eine weitere Eigenschaft des erfindungsgemäßen Verfahrens vorteilhaft, die nämlich darin besteht, daß der Film bis zur endgültigen Verdunstung des Lösungsmittels geringfügig schrumpft und so einen noch besseren Zusammenhalt an der Nahtstelle fördert.

Ebenso vorteilhaft läßt sich die Erfindung im Rahmen einer Reparatur von Löchern, Durchschlägen und anderweitigen Beschädigungen an Fahrzeugreifen verwenden. Statt an den Nahtstellen wird mit Hilfe des Films die Reparaturstelle luftdicht abgedeckt. Es bedarf also nicht mehr des Aufbringens eines Hüllenteils und dessen ringsum erfolgende Randabdichtung mittels klebefähigem Material, sondern die Hülle wird durch den Film gebildet, der selbst an der Reparaturstelle haftet und dennoch nach Durchführung der Reparatur wieder abziehbar ist.

Nachfolgend wird ein Anwendungsbeispiel des erfindungsgemäßen Verfahrens erläutert:

Für die Erneuerung des Laufstreifens eines abgefahrenen Kraftfahrzeugreifens soll bei Anwendung eines Kalterneuerungsverfahrens, bei dem die Anwendung einer Voll- oder Teilhülle zweckmäßig oder geboten ist, die Erfindung angewandt werden, also eine Runderneuerung mit einem Film an den Nähtstellen durchgeführt werden, der die Voll- bzw. Teilhülle ersetzt. Außerdem soll eine Reparatur an der Karkasse durchgeführt werden, für die gleichfalls ein Film mit der erfindungsgemäßen Zusammensetzung anstelle eines Hüllenabschnitts gebraucht wird.

Zunächst wird ein Liter Ausgangsflüssigkeit zur Erzeugung des Filmes hergestellt, und zwar dadurch, daß 25 Gewichtsprozent Desmopan® 385 der Firma Bayer intensiv mit 75 Gewichtsprozent N,N-Dimethylformamid ($C_3H_7NO$) als Lösungsmittel solange vermischt werden, bis das PUR-Elastomergranulat von dem Lösungsmittel vollständig gelöst und gleichmäßig im Lösungsmittel verteilt ist. Das Lösungsmittel kann unter der Bestellnummer 15440 von der Firma Riedel-de Haën AG bezogen werden.

Das so hergestellte Ausgangsprodukt ist zähflüssig und läßt sich mit einem Pinsel, einem Spachtel oder aber auch mit einer Spritzpistole unter Benutzung von Kartuschen auf Oberflächen auftragen.

Die Karkasse des rundzuerneuernden Reifens wird in üblicher Weise in einer Rauhmaschine vorbereitet, mit Luft aufgeblasen und mit einer handelsüblichen Lösung beispielsweise auf der Basis von Benzin eingestrichen. Auf die so vorbereitete Karkasse wird eine ca. 1 mm dicke Bindekautschukschicht einer handelsüblichen Bindekautschukmischung aufgebracht. Ein dem Karkassendurchmesser entsprechender, im vorliegenden Fall 210 mm breiter Laufstreifenring wird ebenfalls mit handelsüblichem Lösungsmittel eingestrichen, ebenso die Bindekautschukschicht auf der Karkasse. Der Laufstreifenring läßt sich durch die Wirkung des Lösungsmittels, das einen Gleiteffekt hervorruft, leicht auf die Karkasse schieben, jedenfalls bevor die Lösung bzw. das Lösungsmittel in die Bindekautschukschicht eingedrungen oder abgetrocknet ist.

Nun wird das Ausgangsprodukt mittels eines Spachtels auf beide Karkassenseiten jeweils ringförmig im Bereich der seitlichen Austrittsstellen der Bindekautschukschicht aufgetragen, und zwar so, daß die Austrittsstellen überbrückt und verschlossen werden. Der Auftrag zur Bildung des Films erstreckt sich bis zur Kante der Laufstreifenschulter nach außen und, von der Austrittsstelle der Bindekautschukschicht her gesehen, etwa gleich weit radial nach innen. Doch die im Einzelfall erforderliche Breite ist von den jeweiligen Erfordernissen abhängig und nicht zu verallgemeinern.

Nach dem Auftragen des Filmes wird ein etwa gleich breiter Nylongewebestreifen aufgelegt und angedrückt, wobei die der Karkasse zugewandte Fläche des Streifens vollständig mit dem Ausgangsprodukt für den Film benetzt wird. Nach dem Abtrocknen des Filmes bzw. nach dem Verdunsten des Lösungsmittels entsteht ein an der Gummioberfläche des Schichtaufbaus der Karkasse fest und sicher haftender Überzug mit vollkommen dichter, geschlossener Oberfläche. Während des Abtrocknens ist ein Schrumpfen zu beobachten, wodurch auf die überzogenen Teile Druck ausgeübt wird. Wegen der hohen Festigkeitswerte und der absoluten Unempfindlichkeit des Filmes reicht bereits eine Dicke von 0,2 bis 0,4 mm vollständig aus.

Nach dem vollständigen Abtrocknen des Films wird der Reifen im Überdruckraum bei einer Temperatur von 95°C und bei einem Druck von 5 bis 6 bar abgeheizt. Nach der Entnahme des fertigen Reifens aus dem Druckraum läßt sich der Film auf beiden Seiten des Reifens leicht abreißen.

Dabei unterstützt der Nylongewebeabschnitt das leichte und vollständige Abziehen des Überzuges von der Karkasse trotz starker Unebenheiten und trotz eines zerklüfteten Seitendekors, in die das Ausgangsprodukt des Filmes jeweils tief eingedrungen war.

Die Reparaturstelle der Karkasse wurde im übrigen in einem Arbeitsgang mit der Bindekautschukschicht auf der Karkasse vulkanisiert. Nach üblicher Vorbereitung der Reparaturstelle und Einbringen und Befestigen eines Bindekautschukkegels wurde die Reparaturstelle in gleicher Weise wie vorher die seitlichen Nahtstellen mit dem Ausgangsprodukt des Filmes überzogen, so daß sich auch hier ein ringsum die Reparaturstelle an der Karkasse festanhaftender Film gebildet hatte. Die Arbeitserleichterung durch Anwendung eines solchen Films ist beim Reparieren besonders ausgeprägt, weil hier insbesondere bei grobstolligen Reifen das Aufbringen eines ringsum vakuumdicht abzudichtenden Hüllenabschnitts oft recht schwierig ist.

**Patentansprüche**

1. Verfahren zum Abdichten der Nahtstellen zwischen einem Laufstreifen und einer Karkasse bei der Reifenrunderneuerung eines abgefahrenen Luft- oder Vollgummireifens, bei dem auf die vorbereitete Karkasse des Reifens eine Bindekautschukschicht und auf diese ein vorgefertigter Gummilaufstreifen aufgebracht, gasförmige Einschlüsse zwischen den aufgebrachten Schichten abgeführt und der so vorbereitete Rohling zum Vulkanisieren der Bindekautschukschicht in einem Überdruckraum erwärmt wird und bei dem vor dem Erwärmen in dem Überdruckraum die Nahtstellen mit Hilfe eines flüssigkeitsdichten Filmes aus einem in Lösungsmittel erweichten Polyurethan abgedeckt werden, der nach der Erwärmung wieder entfernt wird, dadurch gekennzeichnet, daß ein in Dimethylformamid ($C_3H_7NO$) aufgelöstes, thermoplastisch verarbeitbares PUR-Elastomer, nämlich ein Desmopan® 385-Granulat als flüssigkeitsdichter Film verwendet wird, und daß auf den noch nicht abgetrockneten Film ein Gewebe aufgebracht und angedrückt wird.

2. Verfahren nach Anspruch 1, dadurch gekennzeichnet, daß als Gewebe ein Nylongewebe eingesetzt wird.

3. Verfahren nach einem der Ansprüche 1 oder 2, dadurch gekennzeichnet, daß in das Lösungsmittel 10 bis 30 Gewichtsprozent PUR-Elastomermaterial eingemischt wird.

4. Verfahren nach einem der vorhergehenden Ansprüche, dadurch gekennzeichnet, daß der Film mittels eines Spachtels oder Pinsels aufgebracht oder auf die Oberfläche aufgespritzt wird, insbesondere mittels einer Spritzpistole.

## Claims

1. Process for sealing the seams between a tread rubber and a casing during tyre remoulding of a worn out pneumatic tyre or solid rubber tyre, in which a layer of bonding rubber is applied to the prepared casing of the tyre and on this a previously prepared vulcanised tread rubber is applied, gaseous entrapments between the applied layers are removed and the green tyre prepared in thus way is heated in a pressure chamber to vulcanize the layer of bonding rubber and in which before heating in the pressure chamber the seams are covered with a film impervious to fluids made from a polyurethane softened in a solvent, the film being removed after heating, characterized in that a thermoplastically processable PUR elastomer, namely granules of Desmopan$^{oc}$ 385, dissolved in dimethyl formamide ($C_3H_7NO$), is used as the film impervious to fluids and that a fabric is applied to the still undried film and pressure is applied to the fabric.

2. Process according to claim 1, characterized in that a nylon fabric is used as fabric.

3. Process according to one of claims 1 or 2, characterized in that 10 to 30 percent by weight of PUR elastomer material is mixed with the solvent.

4. Process according to one of the preceding claims, characterized in that the film is applied using a spatula or brush or is spayed onto the surface, particularly by means of a spray gun.

## Revendications

1. Procédé pour rendre étanche les jonctions entre une bande de roulement et une carcasse pour le rechapage d'un bandage plein ou d'un bandage pneumatique lisse d'un pneumatique selon lequel une couche de caoutchouc liant est appliquée sur la carcasse préparée du pneu, une bande de roulement préfabriquée en caoutchouc est appliquée sur celle-ci, les inclusions gazeuses entre les couches appliquées sont évacuées, la pièce brute ainsi préparée est réchauffée dans une chambre de surpression pour vulcaniser la couche de caoutchouc liant et selon lequel les jonctions sont recouvertes, avant le réchauffement dans la chambre de surpression, à l'aide d'un film étanche au liquide constitué par un polyuréthane ramolli dans un solvant qui est ensuite enlevé, après réchauffement, caractérisé en ce qu'un élastomère de polyuréthane dissous dans du formamide diméthylique ($CH_3H_7NO$), qui peut être traité de manière à être thermoplastique, à savoir un granulé Desmopan$^{®}$ 385 est utilisé comme film étanche au liquide et qu'un tissu est appliqué et pressé sur le film qui n'est pas encore séché.

2. Procédé selon la revendication 1, caractérisé en ce qu'un tissu de nylon est utilisé comme tissu.

3. Procédé selon l'une des revendications 1 ou 2, caractérisé en ce que 10 à 30% en poids de matière à base d'élastomère de polyuréthane sont mélangés au solvant.

4. Procédé selon l'une des revendications précédentes, caractérisé en ce que le film est appliqué au moyen d'une spatule ou d'un pinceau ou qu'il est projeté par pulvérisation sur la surface, en particulier au moyen d'un pistolet-pulvérisateur.